# EUROPÄISCHE PATENTSCHRIFT

(11) **EP 1 922 232 B1**
(45) Veröffentlichungstag und Bekanntmachung des Hinweises auf die Patenterteilung: **16.06.2010**
(21) Anmeldenummer: 06791363.2
(22) Anmeldetag: 06.09.2006
(51) Int. Cl.: B60R 21/237

(54) **GASSACK, INSBESONDERE ZUM SCHUTZ DES KNIEBEREICHS EINES FAHRZEUGINSASSEN**
AIRBAG, IN PARTICULAR, FOR PROTECTING THE KNEE AREA OF A VEHICLE OCCUPANT
AIRBAG DESTINE NOTAMMENT A PROTEGER LES PASSAGERS D'UN VEHICULE, AU NIVEAU DES GENOUX

(30) Priorität: 07.09.2005 DE 102005043308
(43) Veröffentlichungstag der Anmeldung: 21.05.2008
(73) Patentinhaber: Takata-Petri AG, 63743 Aschaffenburg (DE)
(72) Erfinder: RIETZ, Carsten, 12351 Berlin (DE); ECKERT, Nick, 12587 Berlin (DE)
(74) Vertreter: Baumgärtel, Gunnar
(86) Internationale Anmeldenummer: PCT/DE2006/001585
(87) Internationale Veröffentlichungsnummer: WO 2007/028376

(56) Entgegenhaltungen:
- EP-A1- 0 952 043
- EP-A1- 1 300 299
- DE-A1- 4 236 131
- US-A- 3 810 654

## Beschreibung

Die Erfindung betrifft einen Gassack, insbesondere zum Schutz des Kniebereichs eines Fahrzeuginsassen.

Es ist bekannt, in Airbags Fangbänder anzuordnen, um dem entfalteten Gassack eine bestimmte Form zu geben bzw. um den Gassack in mehrere Kammern zu unterteilen. So ist aus dem Gebrauchsmuster DE 20 2004 014 653 ein Gassack zum Schutz des Kniebereichs eines Fahrzeuginsassen bekannt, der durch Nähte in zwei Kammern unterteilt ist. Der Gassack wird aus einem einzigen Zuschnitt hergestellt. Der Nachteil der Unterteilung eines Gassacks durch Nähte besteht darin, dass an der Nahtstelle gegenüberliegende Gassackabschnitte miteinander vernäht sind, und somit in diesem Bereich nach Entfaltung des Gassacks kein Gaspolster vorhanden ist.

Weiterhin ist aus der Druckschrift EP0952043 ein Gassack bekannt, der zur Unterteilung des Gassacks Fangbänder aufweist. In diesem Fall ist an dieser Stelle nach Entfaltung des Gassacks ein Gaspolster vorhanden. Der Nachteil dieses Gassacks besteht darin, dass jedes Fangband ein zusätzliches Bauteil darstellt, wodurch zusätzliche Arbeitsgänge bei der Herstellung des Gassacks erforderlich werden.

Die DE 4 236 131 zeigt alle Merkmale der Präambel von Anspruch 1.

Der Erfindung liegt deshalb die Aufgabe zugrunde, die Herstellung eines Gassacks, insbesondere für den Schutz des Kniebereichs eines Fahrzeuginsassen, weiter zu vereinfachen.

Erfindungsgemäß wird das gemäß den Merkmalen des Anspruchs 1 erreicht.

Bei einem Gassack, insbesondere zum Schutz des Kniebereichs eines Fahrzeuginsassen, wobei der Gassack durch Falten und Verbinden der Kanten eines einteiligen Zuschnitts hergestellt ist, weist der Zuschnitt neben einem Gassackabschnitt, der für die Herstellung des Gassacks bestimmt ist, mindestens einen Abschnitt auf, der nach dem Verbinden mindestens ein Zusatzteil als ein am Gassackabschnitt befestigtes Fangband des Gassacks darstellt. Ein solcher Gassack weist den Vorteil auf, dass durch die Integration eines Zusatzteils in den einteiligen Zuschnitt für den Gassack ein gesonderter Zuschnitt und Nähte eingespart werden. Dadurch wird die Fertigung des Gassacks preiswerter.

Es ist zweckmäßig, dass der Zuschnitt einen Fangbandabschnitt an einer Seite aufweist, wobei die Breite des Fangbandabschnitts geringer ist als die geringste Breite des übrigen Materialstücks.

Der erfindungsgemäße Zuschnitt ermöglicht die Anordnung eines Fangbandes oder mehrerer Fangbänder. So kann der Fangbandabschnitt eine Länge aufweisen, die ein einziges Fangband ermöglicht. Der Gassack ist dann so aufgebaut, dass das Ende des Fangbandabschnittes an der für das Fangband vorgesehenen Stelle am Zuschnitt befestigt ist und dass das Ende des Zuschnitts, das dem Fangbandabschnitt gegenüberliegt, zu einer Schlaufe umgeschlagen ist und an dem an den Fangbandabschnitt angrenzenden Bereich des Zuschnitts befestigt ist.

Der Fangbandabschnitt kann weiterhin eine Länge aufweisen, die zwei Fangbänder ermöglicht. In diesem Fall ist der Gassack dann so aufgebaut, , dass der mittlere Bereich des Fangbandabschnittes an den für die Fangbänder vorgesehenen Stellen am Gassackabschnitt befestigt ist, dass das Ende des Gassackabschnitts, das dem Fangbandabschnitt gegenüberliegt, zu einer Schlaufe umgeschlagen ist, dass das Ende des Fangbandabschnittes zur Bildung des ersten Fangbandes mit dem umgeschlagenen Teil des Gassackabschnitts verbunden ist, und dass das Ende des Gassackabschnitts an dem an den Fangbandabschnitt angrenzenden Bereich des Gassackabschnitts zur Bildung des zweiten Fangbandes befestigt ist.

Mehrere Fangbänder sind auch dadurch möglich, dass jedes Fangband aus einem unterschiedlichen Fangbandabschnitt gebildet ist. So kann der Zuschnitt mindestens einen Fangbandabschnitt an gegenüberliegenden Seiten aufweisen. Zur Erzielung eines Gassacks mit drei Fangbändern kann an einer Seite ein Fangbandabschnitt im mittleren Bereich des Zuschnitts vorgesehen sein und an der gegenüberliegenden Seite können zwei Fangbandabschnitte in seitlichen Bereichen des Zuschnitts vorgesehen sein.

Der Gassack ist dann so aufgebaut, dass das Ende des im mittleren Bereich des Zuschnitts vorgesehenen Fangbandabschnittes an der für das Fangband vorgesehenen Stelle am Zuschnitt befestigt ist und dass das Ende des Gassackabschnitts, das dem Fangbandabschnitt gegenüberliegt, zu einer Schlaufe umgeschlagen ist und an dem an den Fangbandabschnitt angrenzenden Bereich des Zuschnitts befestigt ist und dass die zwei im seitlichen Bereich des Zuschnitts vorgesehenen Fangbandabschnitte an der für diese Fangbänder vorgesehenen Stelle des Zuschnitts befestigt sind.

In einer weiteren Ausgestaltung ist speziell bei einem Gassack für den Kniebereich vorgesehen, dass der Gassack Einstülpungen aufweist, deren Faltkanten in Richtung der Befestigungsbereiche verlaufen.

In einer zweiten Ausführungsform ist als Zusatzteil ein Einblasbereich für den Gassack vorgesehen.

Zur Erzielung einer einfachen Fertigung ist vorgesehen, dass der Abschnitt des Zuschnitts für die Herstellung des Gassacks und die Abschnitte für Zusatzteile rechteckig sind. Als Material für den Gassack und damit für den Zuschnitt ist bevorzugt Gewebe vorgesehen.

Ein Verfahren zur Herstellung eines Gassacks unter Verwendung eines einzigen Zuschnitts ist erfindungsgemäß gekennzeichnet durch folgende Schritte:
- Ausbreitung eines Zuschnitts, der einen Abschnitt für die Herstellung des Gassacks und mindestens einen Fangbandabschnitt aufweist,
- Verbinden eines Bereiches des Fangbandabschnitts mit dem Abschnitt für die Herstellung des Gassacks,
- Mindestens einmaliges Umschlagen des Abschnitts für die Herstellung des Gassacks,
- Verbinden des umgeschlagenen Abschnitts mit dem Abschnitt für die Herstellung des Gassacks im Bereich des Fangbandes.

Zur Bildung eines einzigen Fangbandes oder zur Bildung von mehreren Fangbändern wobei jedes Fangband aus einem unterschiedlichen Fangbandabschnitt gebildet wird, ist erfindungsgemäß vorgesehen, dass der Zuschnitt mit dem an einem Ende befindlichen Fangbandabschnitt umgeschlagen wird, dass das Ende des Fangbandabschnittes an der für das Fangband vorgesehenen Stelle am Abschnitt für die Herstellung des Gassacks befestigt wird und dass das Ende des Zuschnitts, das dem Fangbandabschnitt gegenüberliegt, ebenfalls umgeschlagen wird und an dem Bereich des Zuschnitts befestigt wird, der an den Fangbandabschnitt angrenzt.

Zur Bildung von zwei Fangbändern ist erfindungsgemäß vorgesehen dass der Zuschnitt mit dem an einem Ende befindlichen Fangbandabschnitt zu einer Schlaufe umgeschlagen wird, dass der mittlere Bereich des Fangbandabschnittes an den für die Fangbänder vorgesehenen Stellen am Zuschnitt befestigt wird, dass das Ende des Zuschnitts , das dem Fangbandabschnitt gegenüberliegt, ebenfalls zu einer Schlaufe umgeschlagen wird , dass das Ende des Fangbandabschnittes zur Bildung eines ersten Fangbandes mit dem umgeschlagenen Teil des Zuschnitts verbunden wird und dass das Ende des Zuschnitts an dem an den Fangbandabschnitt angrenzenden Bereich des Gassackabschnitts zur Bildung des zweiten Fangbandes befestig wird.

Zur Fertigstellung eines Gassacks insbesondere für den Kniebereich wird der Zuschnitt nach dem Annähen der Fangbänder an mindestens einer Seite, die in Richtung der Befestigungsbereiche verläuft, eingestülpt und anschießend werden die senkrecht zu den Fangbandlängskanten verlaufenden Enden des Zuschnitts verbunden.

Sämtliche Verbindungen werden vorzugsweise genäht.

Der erfindungsgemäße Gassack wird so im Fahrzeug eingebaut, dass die Verbindungsbereiche und damit die Fangbänder nach der Entfaltung des Gassacks quer zur Fahrzeuglängsachse verlaufen.

Die Erfindung soll in Ausführungsbeispielen anhand von Zeichnungen erläutert werden. Es zeigen:
- Fig. 1a - f: ein Ausführungsbeispiel, das einen Gassacks mit einem mittig angeordneten Fangband in verschiedenen Phasen der Herstellung zeigt;
- Fig. 2a - f: ein Ausführungsbeispiel, das einen Gassack mit zwei mittig angeordneten Fangbändern; in verschiedenen Phasen der Herstellung zeigt;
- Fig. 3a - f: ein Ausführungsbeispiel, das einen Gassack mit drei Fangbändern, von denen zwei seitlich angeordnet sind und ein Fangband mittig angeordnet ist, in verschiedenen Phasen der Herstellung zeigt;
- Fig. 4a - d: ein Ausführungsbeispiel mit einem angeformten Einblasbereich.

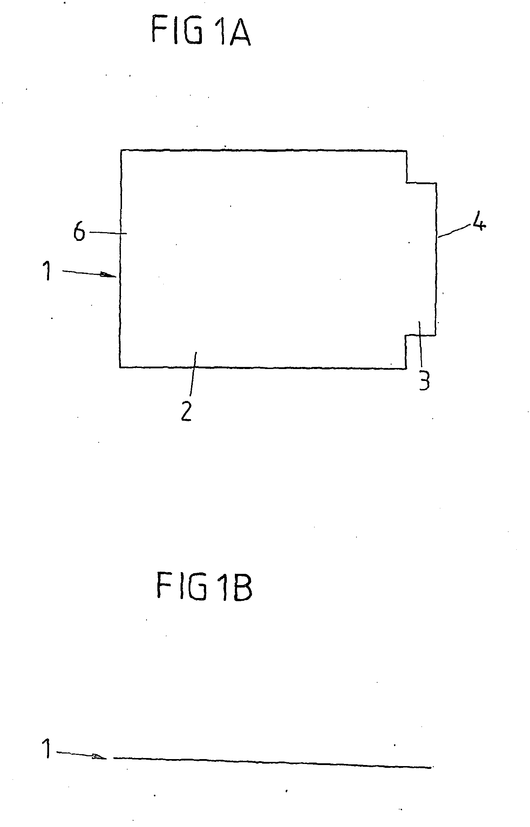

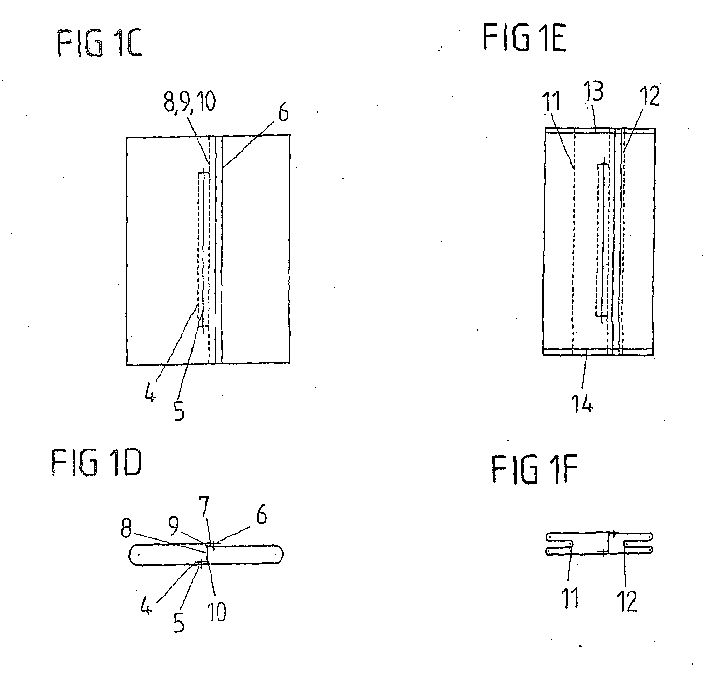

In der Fig. 1a ist ein Zuschnitt 1 für einen Gassack mit einem mittig angeordneten Fangband in der Draufsicht dargestellt. Dieser Zuschnitt besteht aus einem Abschnitt 2, der für die Herstellung eines Gassacks bestimmt ist, und aus einem Abschnitt 3, der für die Herstellung eines Fangbandes bestimmt ist, die nachfolgend als Gassackabschnitt und Fangbandabschnitt bezeichnet werden. Die Seitenansicht der Fig. 1b zeigt, dass der Zuschnitt 1 aus einem flachen Materialstück, z.B. aus einem Gewebestück hergestellt ist. Der Fangbandabschnitt 3 bildet das eine Ende des Zuschnitts 1 und ist schmaler als der Gassackabschnitt 2, so dass sich das Fangband, wie aus den Figuren 1c und 1e ersichtlich ist, nicht über die gesamte Breite des Gassacks erstreckt. Der Fangbandabschnitt 2 weist eine Länge auf, wie sie für ein schmales aus den Figuren 1 d und 1f ersichtliches Fangband erforderlich ist.

Zu Beginn der Herstellung wird der Zuschnitt mit dem Fangbandabschnitt 3 umgeschlagen und das Ende 4 des Fangbandabschnittes wird an der für das Fangband vorgesehenen Stelle 5 am Gassackabschnitt befestigt. Anschließend wird das Ende 6 des Zuschnitts, das dem Fangbandabschnitt 3 gegenüberliegt, ebenfalls umgeschlagen und an dem Bereich 7 des Gassackabschnitts 2 befestigt. Der Bereich 7 grenzt an den Fangbandabschnitt 3 an. Diese Phase der Herstellung des Gassacks ist aus den Figuren 1c und 1d erkennbar. Auf diese Weise ist ein schmales Fangband 8 entstanden, das zwischen den Befestigungsbereichen 5, 7 parallel zu diesen verläuft.

Im nächsten Schritt werden die Enden des Gassacks, die parallel zum Fangband 8 verlaufen, so eingestülpt, dass die Faltkanten 11,12 parallel zu den Befestigungsbereichen 5, 7 verlaufen. Zum Schluss werden die übereinander liegenden seitlichen Kanten des Gassackabschnitts 2 durch Nähte 13, 14 miteinander verbunden, so dass nunmehr ein kompletter Gassack vorliegt, wie es aus der Fig. 1e ersichtlich ist.

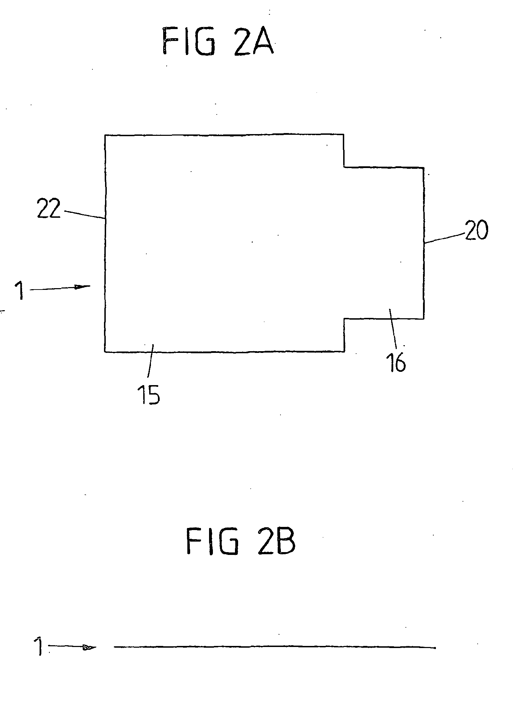

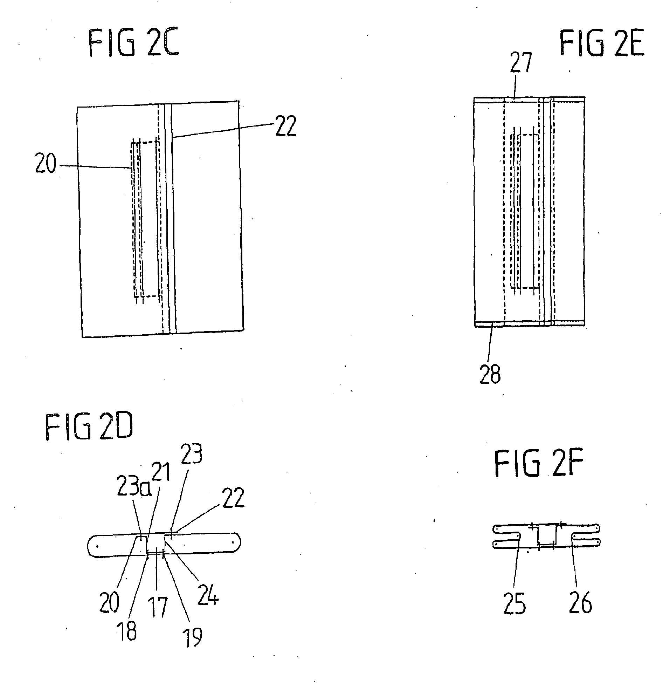

In der Fig. 2a ist ein Zuschnitt für einen Gassack mit zwei mittig angeordneten Fangbändern in der Draufsicht dargestellt. Dieser Zuschnitt besteht aus einem Gassackabschnitt 15 und einem Fangbandabschnitt 16. Die Seitenansicht der Fig. 2 b zeigt, dass auch bei diesem Ausführungsbeispiel der Zuschnitt aus einem flachen Materialstück, z.B. aus einem Gewebestück hergestellt ist. Der Fangbandabschnitt 16 bildet das eine Ende des Zuschnitts 1 und ist schmaler als der Gassackabschnitt 15, so dass sich die Fangbänder, wie aus den Figuren 2c und 2e ersichtlich ist, nicht über die gesamte Breite des Gassacks erstrecken. Der Fangbandabschnitt 16 weist eine Länge auf, wie sie für zwei schmale aus den Figuren 2d und 2f ersichtliche Fangbänder erforderlich ist.

Zur Bildung von zwei Fangbändern wird der Zuschnitt 1 mit dem an einem Ende befindlichen Fangbandabschnitt 16 zu einer Schlaufe umgeschlagen. Anschließend wird der mittlere Bereich 17 des Fangbandabschnittes 16 an den für die Fangbänder vorgesehenen Stellen 18, 19 am Gassackabschnitt 15 befestigt. Dann wird das Ende 22 des Zuschnitts 1, das dem Fangbandabschnitt 16 gegenüberliegt, ebenfalls zu einer Schlaufe umgeschlagen und das Ende 20 des Fangbandabschnittes 16 wird zur Bildung eines ersten Fangbandes 21 mit dem umgeschlagenen Teil des Gassackabschnitts 15 in einem Bereich 23a verbunden. Danach wird das Ende 22 des Gassackabschnitts 15 an dem an den Fangbandabschnitt 16 angrenzenden Bereich 23 des Gassackabschnitts 15 zur Bildung eines zweiten Fangbandes 24 befestigt.

Im nächsten Schritt werden die Enden des Gassacks, die parallel zu den Fangbändern 21, 24 verlaufen, wie beim ersten Ausführungsbeispiel so eingestülpt, dass die Faltkanten 25, 26 parallel zu den Befestigungsbereichen 18, 19, 23, 23a verlaufen. Zum Schluss werden die übereinander liegenden seitlichen Kanten des Gassackabschnitts 15 durch Nähte 27, 28 miteinander verbunden, so dass nunmehr ein kompletter Gassack vorliegt, wie er aus der Fig. 2e ersichtlich ist.

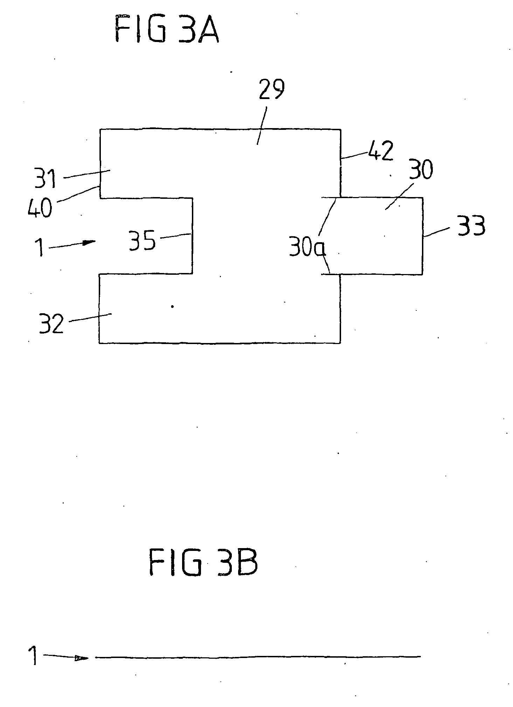

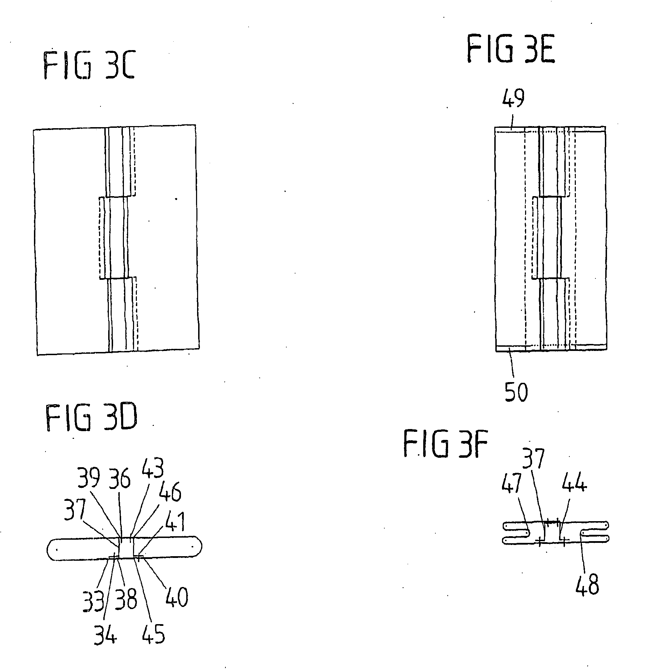

In der Fig. 3a ist ein Zuschnitt 1 für einen Gassack mit einem Fangband im mittleren Bereich und zwei Fangbändern im seitlichen Bereich in der Draufsicht dargestellt. Dieser Zuschnitt besteht aus einem Gassackabschnitt 29, einem Fangbandabschnitt 30 im mittleren Bereich mit Schlitzen 30a und zwei Fangbandabschnitte 31, 32 in seitlichen Bereichen.

Zu Beginn der Herstellung wird der Zuschnitt mit dem Fangbandabschnitt 30 bis in den Bereich der Schlitze 30 a umgeschlagen und das Ende 33 des Fangbandabschnittes 30 wird an der für das Fangband vorgesehenen Stelle 34 am Gassackabschnitt 29 befestigt. Anschließend wird das Ende 35 des Zuschnitts, das dem Fangbandabschnitt 30 gegenüberliegt, zusammen mit den seitlichen Fangbandabschnitten 31, 32 ebenfalls umgeschlagen, wobei die seitlichen Fangbandabschnitte 31, 32 neben dem Fangbandabschnitt 30 in das Innere des Gassacks geführt werden. Anschließend werden das Ende 35 des Zuschnitts und die danebenliegenden Bereiche des Gassackabschnitts 29 an dem Bereich 36 des Gassackabschnitts 29 befestigt, der an den Fangbandabschnitt 30 sowie an die Enden der Fangbandabschnitte 31, 32 angrenzt. Auf diese Weise ist ein schmales mittleres Fangband 37 entstanden, das zwischen den Befestigungsbereichen 34, 36 parallel zu diesen verläuft.

Zur Bildung der seitlich angeordneten Fanbänder werden die Fangbandabschnitte 31, 32 mit ihren Enden 40 an dem dafür vorgesehenen Bereich 41 am Gassackabschnitt 29 befestigt. Anschließend werden die sich überlappenden Gassacklagen an einem parallel zum Bereich 36 verlaufenden Bereich 43 miteinander verbunden. Auf diese Weise entstehen zwei schmale seitliche Fangbänder 44, die zwischen den Befestigungsbereichen 41, 43 parallel zu diesen verlaufen.

Im nächsten Schritt werden die Enden des Gassacks, die parallel zu den Fangbändern 37, 44 verlaufen, wie bei den vorhergehenden Ausführungsbeispielen so eingestülpt, dass die Faltkanten 47,48 parallel zu den Befestigungsbereichen 34, 36, 41, 43 verlaufen. Zum Schluss werden die übereinander liegenden seitlichen Kanten des Gassackabschnitts 29 durch Nähte 49, 50 miteinander verbunden, so dass nunmehr ein kompletter Gassack vorliegt, wie er aus der Fig. 3e ersichtlich ist.

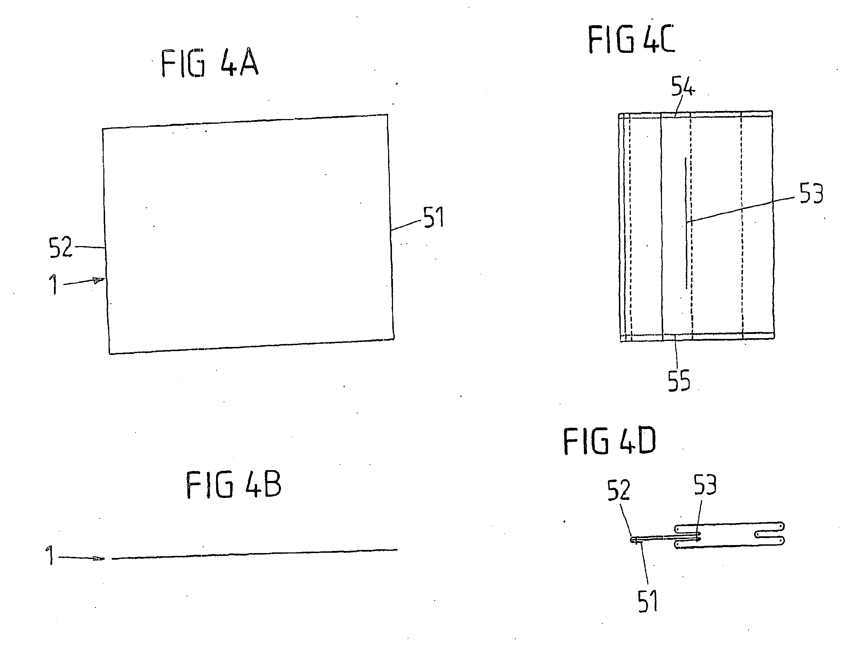

In der Fig. 4a ist ein Zuschnitt 1 für einen Gassack dargestellt, bei dem aus dem rechteckigen Zuschnitt 1 ein Gassack mit einem Einblasbereich hergestellt wird. Hierzu wird ein Ende 51 des Zuschnitts 1 so umgeschlagen, dass es über das gegenüberliegende Ende 52 hinausragt. Anschließend wird das Ende 51 umgeschlagen und mit dem Ende 52 vernäht, wie es insbesondere aus der Fig. 4d ersichtlich ist. Weiterhin werden die umgeschlagenen Teile des Zuschnitts 1 in einem vorbestimmten Abschnitt durch eine Naht 53 miteinander verbunden. Aus der Fig. 4c ist ersichtlich, dass sich diese Naht nicht über die gesamte Breite des Gassacks erstreckt, d.h. den Gassack nicht in zwei voneinander getrennte Kammern unterteilt.

Anschließend werden die gegenüberliegenden Enden parallel zur Naht 53 eingestülpt und die übereinander liegenden seitlichen Kanten werden durch Nähte 54, 55 miteinander verbunden, so dass ein kompletter Gassack vorliegt, wie es aus der Fig. 4c ersichtlich ist.

## Patentansprüche

1. Gassack, insbesondere zum Schutz des Kniebereichs eines Fahrzeuginsassen, wobei der Gassack durch Falten und Verbinden der Kanten eines einteiligen Zuschnitts hergestellt ist,
**dadurch gekennzeichnet, dass** der Zuschnitt (1) angrenzend an einen Gassackabschnitt (2, 15, 29) der für die Herstellung des Gassacks bestimmt ist, mindestens einen Abschnitt (3, 16, 30, 31, 32) aufweist, der nach dem Verbinden mindestens ein als Fangband angeformtes Zusatzteil des Gassacks darstellt und mit seinem Ende (4, 20 33, 40) am Gassackabschnitt (2, 15, 29) befestigt ist

2. Gassack nach Anspruch 1, **dadurch gekennzeichnet, dass** der Zuschnitt (1) einen Fangbandabschnitt (3, 16) an einer Seite aufweist, wobei die Breite des Fangbandabschnitts (3, 16) geringer ist als die geringste Breite des übrigen Materialstücks.

3. Gassack nach Anspruch 2, **dadurch gekennzeichnet, dass** der Fangbandabschnitt (3) eine Länge aufweist, die ein einziges Fangband (8, 37, 44) ermöglicht.

4. Gassack nach Anspruch 2 oder 3, **dadurch gekennzeichnet, dass** das Ende (4) des Fangbandabschnittes (3) an der für das Fangband (8) vorgesehenen Stelle (5) am Zuschnitt (1) befestigt ist und dass das Ende (6) des Zuschnitts (1), das dem Fangbandabschnitt (3) gegenüberliegt, zu einer Schlaufe umgeschlagen ist und an dem an den Fangbandabschnitt (3) angrenzenden Bereich (7) des Gassackabschnitts (2) befestigt ist.

5. Gassack nach Anspruch 2, **dadurch gekennzeichnet, dass** der Fangbandabschnitt (16) eine Länge aufweist, die zwei Fangbänder (21, 24) ermöglicht.

6. Gassack nach Anspruch 2 und 5, **dadurch gekennzeichnet, dass** der mittlere Bereich (17) des Fangbandabschnittes (16) an den für die Fangbänder vorgesehenen Stellen (18, 19) am Gassackabschnitt (15) befestigt ist, dass das Ende (22) des Gassackabschnitts (15), das dem Fangbandabschnitt (16) gegenüberliegt, zu einer Schlaufe umgeschlagen ist, dass das Ende (20) des Fangbandabschnittes (16) zur Bildung des ersten Fangbandes (21) mit dem umgeschlagenen Teil des Gassackabschnitts (15) verbunden ist, und dass das Ende (22) des Gassackabschnitts (15) an dem an den Fangbandabschnitt angrenzenden Bereich des Gassackabschnitts (15) zur Bildung des zweiten Fangbandes (24) befestigt ist.

7. Gassack nach Anspruch 1, **dadurch gekennzeichnet, dass** mehrere Fangbänder ((37, 44) vorgesehen sind, wobei jedes Fangband (37, 44) aus einem unterschiedlichen Fangbandabschnitt gebildet ist

8. Gassack nach Anspruch 1 und 7, **dadurch gekennzeichnet, dass** der Zuschnitt (1) mindestens einen Fangbandabschnitt (30, 31, 32) an gegenüberliegenden Seiten (35, 42) aufweist.

9. Gassack nach Anspruch 8, **dadurch gekennzeichnet, dass** an einer Seite (42) ein Fangbandabschnitt (30) im mittleren Bereich des Zuschnitts (1) vorgesehen ist und das an der gegenüberliegenden Seite (35) zwei Fangbandabschnitte (31, 32) in seitlichen Bereichen des Zuschnitts (1) vorgesehen sind.

10. Gassack nach Anspruch 8 oder 9, **dadurch gekennzeichnet, dass** das Ende (33) des im mittleren Bereich des Zuschnitts (1) vorgesehenen Fangbandabschnittes (30) an der für das Fangband (37) vorgesehenen Stelle (34) am Gassackabschnitt (29) befestigt ist und dass das Ende (35) des Gassackabschnitts (29), das dem Fangbandabschnitt (30) gegenüberliegt, zu einer Schlaufe umgeschlagen ist und an dem an den Fangbandabschnitt (30) angrenzenden Bereich des Gassackabschnitts (29) befestigt ist und dass die zwei im seitlichen Bereich des Zuschnitts vorgesehenen Fangbandabschnitte (31, 32) an der für diese Fangbänder vorgesehenen Stelle 41) des Gassackabschnitts 29) befestigt sind.

11. Gassack nach mindestens einem der vorhergehenden Ansprüche, **dadurch gekennzeichnet, dass** der Gassack Einstülpungen aufweist, deren Faltkanten (11, 12, 25, 26, 47, 48) in Richtung der Befestigungsbereiche (5, 7, 18, 19, 23, 23a, 34, 36, 41, 43) verlaufen.

12. Gassack nach mindestens einem der vorhergehenden Ansprüche, **dadurch gekennzeichnet, dass** der Abschnitt (2,15, 29 des Zuschnitts für die Herstellung des Gassacks und die Abschnitte (3, 16, 30, 31, 32) für Zusatzteile rechteckig sind.

13. Gassack nach mindestens einem der vorhergehenden Ansprüche, **dadurch gekennzeichnet, dass** als Material für den Zuschnitt Gewebe vorgesehen ist.

14. Verfahren zur Herstellung eines Gassacks nach Anspruch 1, **gekennzeichnet durch** folgende Schritte:
- Ausbreitung eines Zuschnitts, der einen Abschnitt für die Herstellung des Gassacks und mindestens einen Fangbandabschnitt aufweist,
- Verbinden eines Bereiches des Fangbaridabschnitts mit dem Abschnitt für die Herstellung des Gassacks, wobei aus dem Fangbandabschnitt **durch** Faltung mindestens ein Fangband ausgeformt wird,
- Mindestens einmaliges Umschlagen des Abschnitts für die Herstellung des Gassacks,
- Verbinden des umgeschlagenen Abschnitts mit dem Abschnitt für die Herstellung des Gassacks im Bereich des Fangbandes.

15. Verfahren nach Anspruch 14, **dadurch gekennzeichnet, dass** zur Bildung eines einzigen Fangbandes der Zuschnitt (1) mit dem an einem Ende befindlichen Fangbandabschnitt (3) umgeschlagen wird, dass das Ende des Fangbandabschnittes an der für das Fangband vorgesehenen Stelle (5) am Gassackabschnitt (2), befestigt wird und dass das Ende (6) des Zuschnitts, das dem Fangbandabschnitt (3) gegenüberliegt, ebenfalls umgeschlagen wird und an dem Bereich (7) des Gassackabschnitts (2) befestigt wird, der an den Fangbandabschnitt (3) angrenzt.

16. Verfahren nach Anspruch 14. **dadurch gekennzeichnet, dass** zur Bildung von zwei Fangbändern der Zuschnitt (1) mit dem an einem Ende befindlichen Fangbandabschnitt (16) zu einer Schlaufe umgeschlagen wird, dass der mittlere Bereich (17) des Fangbandabschnittes (16) an den für die Fangbänder vorgesehenen Stellen (18, 19) am Gassackabschnitt (15) befestigt wird, dass das Ende des Zuschnitts (1), das dem Fangbandabschnitt (16) gegenüberliegt, ebenfalls zu einer Schlaufe umgeschlagen wird, dass das Ende des Fangbandabschnittes (16) zur Bildung eines ersten Fangbandes (21) mit dem umgeschlagenen Teil des Gassackabschnitts (15) verbunden wird, und dass das Ende (22) des Gassackabschnitts (15) an dem an den Fangbandabschnitt (16) angrenzenden Bereich (23) des Gassackabschnitts (15) zur Bildung eines zweiten Fangbandes (24) befestigt wird.

17. Verfahren nach mindestens einem der Ansprüche 14 bis 16, **dadurch gekennzeichnet, dass** der Zuschnitt (1) nach dem Annähen der Fangbänder an mindestens einer Seite, die in Richtung der Befestigungsbereiche (5, 7, 18, 19, 23, 23a, 34, 36, 41, 43) verläuft, eingestülpt wird und dass anschließend die senkrecht zu den Fangbandlängskanten (9, 10 38 39 45) verlaufenden Enden des Zuschnitts verbunden werden.

18. Verfahren nach mindestens einem der vorhergehenden Ansprüche, **dadurch gekennzeichnet, dass** sämtliche Verbindungen genäht werden.

## Claims

1. An airbag, in particular for protecting the knee area of a vehicle occupant, the airbag being produced by folding and joining the edges of a single-piece blank,
**characterized in that** the blank (1) comprises, adjacent to an airbag portion (2, 15, 29) which is intended for producing the airbag, at least one portion (3, 16, 30, 31, 32) which, after joining, represents at least one additional part of the airbag, the additional part being integrated as a restraining strap, and being fastened with its end (4, 20, 33, 40) to the airbag portion (2, 15, 29).

2. The airbag as claimed in claim 1, **characterized in that** the blank (1) has a restraining strap portion (3, 16) on one side, the width of the restraining strap portion (3, 16) being smaller than the smallest width of the remaining piece of material.

3. The airbag as claimed in claim 2, **characterized in that** the restraining strap portion (3) is of a length which allows a single restraining strap (8, 37, 44).

4. The airbag as claimed in claim 2 or 3, **characterized in that** the end (4) of the restraining strap portion (3) is fastened to the position (5) on the blank (1) provided for the restraining strap (8), and **in that** the end (6) of the blank (1), which opposes the restraining strap portion (3), is folded back to form a loop and is fastened to the region (7) of the airbag portion (2) adjoining the restraining strap portion (3).

5. The airbag as claimed in claim 2, **characterized in that** the restraining strap portion (16) is of a length which allows two restraining straps (21, 24).

6. The airbag as claimed in claim 2 and 5, **characterized in that** the central region (17) of the restraining strap portion (16) is fastened to the positions (18, 19) on the airbag portion (15) provided for the restraining straps, **in that** the end (22) of the airbag portion (15) which opposes the restraining strap portion (16) is folded back to form a loop, **in that** the end (20) of the restraining strap portion (16) is joined to the folded-back part of the airbag portion (15) to form the first restraining strap (21), and **in that** the end (22) of the airbag portion (15) is fastened to the region of the airbag portion (15) adjoining the restraining strap portion to form the second restraining strap (24).

7. The airbag as claimed in claim 1, **characterized in that** a plurality of restraining straps (37, 44) are provided, each restraining strap (37, 44) being formed from a different restraining strap portion.

8. The airbag as claimed in claim 1 and 7, **characterized in that** the blank (1) has at least one restraining strap portion (30, 31, 32) on opposing sides (35, 42).

9. The airbag as claimed in claim 8, **characterized in that** on one side (42) a restraining strap portion (30) is provided in the central region of the blank (1) and **in that** on the opposing side (35) two restraining strap portions (31, 32) are provided in lateral regions of the blank (1).

10. The airbag as claimed in claim 8 or 9, **characterized in that** the end (33) of the restraining strap portion (30) provided in the central region of the blank (1) is fastened to the position (34) on the airbag portion (29) provided for the restraining strap (37) and **in that** the end (35) of the airbag portion (29) which opposes the restraining strap portion (30), is folded back to form a loop, and is fastened to the region of the airbag portion (29) adjoining the restraining strap portion (30), and **in that** the two restraining strap portions (31, 32) provided in the lateral region of the blank are fastened to the position (41) of the airbag portion (29) provided for said restraining straps.

11. The airbag as claimed in at least one of the preceding claims, **characterized in that** the airbag has turned-in portions, the folded edges thereof (11, 12, 25, 26, 47, 48) extending in the direction of the fastening regions (5, 7, 18, 19, 23, 23a, 34, 36, 41, 43).

12. The airbag as claimed in at least one of the preceding claims, **characterized in that** the portion (2, 15, 29) of the blank for the production of the airbag and the portions (3, 16, 30, 31, 32) for additional parts are rectangular.

13. The airbag as claimed in at least one of the preceding claims, **characterized in that** a woven fabric is provided as material for the blank.

14. A method for producing an airbag as claimed in claim 1, **characterized by** the following steps:
- spreading out a blank which has a portion for producing the airbag and at least one restraining strap portion,
- joining a region of the restraining strap portion to the portion for producing the airbag, at least one restraining strap being shaped from the restraining strap portion by folding,
- folding back at least once the portion for producing the airbag,
- joining the folded-back portion to the portion for producing the airbag in the region of the restraining strap.

15. The method as claimed in claim 14, **characterized in that** for forming a single restraining strap the blank (1) is folded back with the restraining strap portion (3) located at one end, **in that** the end of the restraining strap portion is fastened to the position (5) on the airbag portion (2) provided for the restraining strap, and **in that** the end (6) of the blank which opposes the restraining strap portion (3) is also folded back and is fastened to the region (7) of the airbag portion (2) which adjoins the restraining strap portion (3).

16. The method as claimed in claim 14, **characterized in that** for forming two restraining straps the blank (1) with the restraining strap portion (16) located at one end, is folded back to form a loop, **in that** the central region (17) of the restraining strap portion (16) is fastened to the positions (18, 19) on the airbag portion (15) provided for the restraining straps, **in that** the end of the blank (1) which opposes the restraining strap portion (16), is also folded back to form a loop, **in that** the end of the restraining strap portion (16) is joined to the folded-back part of the airbag portion (15) to form a first restraining strap (21) and **in that** the end (22) of the airbag portion (15) is fastened to the region (23) of the airbag portion (15) adjoining the restraining strap portion (16) to form a second restraining strap (24).

17. The method as claimed in at least one of claims 14 to 16, **characterized in that** the blank (1) is turned in after sewing the restraining straps onto at least one side which extends in the direction of the fastening regions (5, 7, 18, 19, 23, 23a, 34, 36, 41, 43) and **in that**, subsequently, the ends of the blank extending perpendicular to the restraining strap longitudinal edges (9, 10, 38, 39, 45) are joined.

18. The method as claimed in at least one of the preceding claims, **characterized in that** all joins are sewn.

## Revendications

1. Coussin à gaz, en particulier pour la protection de la région des genoux d'un occupant d'un véhicule, dans lequel le coussin à gaz est fabriqué par pliage et par liaison des bordures d'une ébauche d'un seul tenant,
**caractérisé en ce que** l'ébauche (1) comprend, en position adjacente à un tronçon de coussin à gaz (2, 15, 29) destiné à la réalisation du coussin à gaz, au moins un tronçon (3, 16, 30, 31, 32) qui, après la liaison, représente au moins une pièce additionnelle et intégrale du coussin à gaz conformée comme de bande de retenue, et qui est fixée sur le tronçon de coussin à gaz (2, 15, 29) par son extrémité (4, 20, 33, 40).

2. Coussin à gaz selon la revendication 1, **caractérisé en ce que** l'ébauche (1) comprend un tronçon de bande de retenue (3, 16) sur un côté, la largeur du tronçon de bande de retenue (3, 16) étant plus faible que la plus faible largeur de la pièce restante du matériau.

3. Coussin à gaz selon la revendication 2, **caractérisé en ce que** le tronçon de bande de retenue (3) présente une longueur qui permet de réaliser une bande de retenue unique (8, 37, 44).

4. Coussin à gaz selon la revendication 2 ou 3, **caractérisé en ce que** l'extrémité (4) du tronçon de bande de retenue (3) est fixée sur l'ébauche (1) à l'emplacement (5) prévu pour la bande de retenue (8), et **en ce que** l'extrémité (8) de l'ébauche (1) qui se trouve à l'opposé du tronçon de bande de retenue (3) est rabattue pour former une boucle et est fixée sur la zone (7) du tronçon de coussin à gaz (2) adjacente du tronçon de bande de retenue (3).

5. Coussin à gaz selon la revendication 2, **caractérisé en ce que** le tronçon de bande de retenue (16) présente une longueur qui permet de réaliser deux bandes de retenue (21, 24).

6. Coussin à gaz selon la revendication 2 et 5, **caractérisé en ce que** la zone médiane (17) du tronçon de bande de retenue (16) est fixée sur le tronçon de coussin à gaz (15) aux emplacements (18, 19) prévus pour les bandes de retenue, **en ce que** l'extrémité (22) du tronçon de coussin à gaz (18) qui se trouve à l'opposé du tronçon de bande de retenue (16) est rabattue pour former une boucle, **en ce que** l'extrémité (20) du tronçon de bande de retenue (16) est reliée, pour former la première bande de retenue (21), à la partie rabattue du tronçon de coussin à gaz (15), et **en ce que** l'extrémité (22) du tronçon de coussin à gaz (15) est fixée, pour former la seconde bande de retenue (24), à la zone du tronçon de coussin à gaz (15) adjacente au tronçon de bande de retenue.

7. Coussin à gaz selon la revendication 1, **caractérisé en ce qu'**il est prévu plusieurs bandes de retenue (37, 44), et chaque bande de retenue (37, 44) est formée par un tronçon de bande de retenue différent.

8. Coussin à gaz selon la revendication 1 et 7, **caractérisé en ce que** l'ébauche (1) comprend au moins un tronçon de bande de retenue (30, 31, 32) sur des côtés opposés (35, 42).

9. Coussin à gaz selon la revendication 8, **caractérisé en ce qu'**un tronçon de bande de retenue (30) est prévu sur un côté (41) dans la zone médiane de l'ébauche (1), et **en ce que** deux tronçon de bande de retenue (31, 32) sont prévus sur le côté opposé (35) dans des zones latérales de l'ébauche (1).

10. Coussin à gaz selon la revendication 8 ou 9, **caractérisé en ce que** l'extrémité (33) du tronçon de bande de retenue (30) prévue dans la zone médiane de l'ébauche (1) est fixée sur le tronçon de coussin à gaz (29) à l'emplacement (34) prévu pour la bande de retenue (37), et **en ce que** l'extrémité (35) du tronçon de coussin à gaz (29) qui se trouve à l'opposé du tronçon de bande de retenue (30) est rabattue pour former une boucle et est fixée sur la zone du tronçon de coussin à gaz (29) adjacente au tronçon de bande de retenue (30), et **en ce que** les deux tronçon de bande de retenue (31, 32) prévus dans la zone latérale de l'ébauche sont fixés à l'emplacement (41) du tronçon de coussin à gaz (29) qui est prévu pour ces bandes de retenue.

11. Coussin à gaz selon l'une au moins des revendications précédentes, **caractérisé en ce que** le coussin à gaz présente des retroussements, dont les arêtes pliées (11, 12, 25, 26, 47, 48) s'étendent en direction des zones de fixation (5, 7, 18, 19, 23, 23a, 34, 36, 41, 43).

12. Coussin à gaz selon l'une au moins des revendications précédentes, **caractérisé en ce que** le tronçon (2, 15, 29) de l'ébauche pour la réalisation du coussin à gaz, et les tronçons (3, 16, 30, 31, 32) pour des pièces additionnelles sont rectangulaires.

13. Coussin à gaz selon l'une au moins des revendications précédentes, **caractérisé en ce que** l'on prévoit un textile à titre de matériau pour l'ébauche.

14. Procédé pour la réalisation d'un coussin à gaz selon la revendication 1, **caractérisé par** les étapes suivantes :
- on étale une ébauche qui comprend un tronçon pour la réalisation du coussin à gaz et au moins un tronçon pour former une bande de retenue,
- on relie une zone du tronçon de bande de retenue au tronçon pour la réalisation du coussin à gaz, et on forme, par pliage à partir du tronçon de bande de retenue, au moins une bande de retenue,
- on rabat au moins une fois le tronçon pour la réalisation du coussin à gaz,
- on relie le tronçon rabattu au tronçon pour la réalisation du coussin à gaz dans la zone de la bande de retenue.

15. Procédé selon la revendication 14, **caractérisé en ce que**, pour former une unique bande de retenue, l'ébauche (1) est rabattue avec le tronçon de bande de retenue (3) qui se trouve à une extrémité, **en ce que** l'extrémité du tronçon de bande de retenue est fixée sur le tronçon de coussin à gaz (2) prévu pour la bande de retenue, et **en ce que** l'extrémité (6) de l'ébauche qui se trouve à l'opposé du tronçon de bande de retenue (3) est également rabattue et est fixée sur la zone (7) du tronçon de coussin à gaz (2) qui est adjacente au tronçon de bande de retenue (3).

16. Procédé selon la revendication 14, **caractérisé en ce que**, pour former deux bandes de retenue, l'ébauche (1) est rabattue, avec le tronçon de bande de retenue (16) qui se trouve à une extrémité, pour former une boucle, **en ce que** la zone médiane (17) du tronçon de bande de retenue (16) est fixée sur le tronçon de coussin à gaz (15) aux emplacements (18, 19) prévus pour les bandes de retenue, **en ce que** l'extrémité de l'ébauche (1) qui se trouve à l'opposé du tronçon de bande de retenue (16) est également rabattue pour former une boucle, **en ce que** l'extrémité de la portion de bande de retenue (16), pour former une première bande de retenue (21), est reliée à la partie rabattue du tronçon de coussin à gaz (15), et **en ce que** l'extrémité (22) du tronçon de coussin à gaz (15) est fixée, pour former une seconde bande de retenue (24), sur la zone (23) du tronçon de coussin à gaz (15) adjacente au tronçon de bande de retenue (16).

17. Procédé selon l'une au moins des revendications 14 à 16, **caractérisé en ce que**, après couture des bandes de retenue sur au moins un côté qui s'étend en direction des zones de fixation (5, 7, 18, 19, 23, 23a, 34, 36, 41, 43), l'ébauche (1) est retroussée, et **en ce que** les extrémités de l'ébauche qui s'étendent perpendiculairement aux arêtes longitudinales (9, 10, 38, 39, 45) des bandes de retenue sont ensuite reliées.

18. Procédé selon l'une au moins des revendications précédentes, **caractérisé en ce que** la totalité des liaisons sont cousues.
